# EUROPEAN PATENT SPECIFICATION

(11) **EP 3 745 100 B1**
(45) Date of publication and mention of the grant of the patent: **28.08.2024**
(21) Application number: 18902476.3
(22) Date of filing: 23.11.2018
(51) Int. Cl.: G06Q 30/06, G01G 19/00, G06F 17/00, G06Q 10/08, G07C 9/00

(54) **WEIGHT MONITORING-BASED COMMODITY SENSING SYSTEM AND COMMODITY SENSING METHOD**
AUF GEWICHTSÜBERWACHUNG BASIERENDES WARENERFASSUNGSSYSTEM UND WARENERFASSUNGSVERFAHREN
SYSTÈME DE DÉTECTION DE MARCHANDISES BASÉ SUR LA SURVEILLANCE DU POIDS ET PROCÉDÉ DE DÉTECTION DE MARCHANDISES

(30) Priority: 26.01.2018 CN 201810079518
(43) Date of publication of application: 02.12.2020
(73) Proprietor: Shanghai Cloudpick Smart Technology Co., Ltd., Shanghai 200126 (CN)
(72) Inventor: MA, Jieyu, Shanghai 200126 (CN); FENG, Linan, Shanghai 200126 (CN); XIA, Ding, Shanghai 200126 (CN); LI, Tingtao, Shanghai 200126 (CN); WU, Wenyao, Shanghai 200126 (CN); ZHANG, Yimei, Shanghai 200126 (CN)
(74) Representative: Murgitroyd & Company
(86) International application number: PCT/CN2018/117327
(87) International publication number: WO 2019/144691

(56) References cited:
- CN-A- 101 989 333
- CN-A- 105 314 315
- CN-A- 106 454 733
- CN-A- 106 845 962
- CN-A- 107 403 332
- CN-A- 107 480 735
- CN-A- 108 332 829
- CN-U- 204 883 802
- US-A1- 2014 201 041
- US-A1- 2015 012 396
- US-A1- 2015 127 496
- US-B2- 9 129 245

## Description

### FIELD

The disclosure relates to commodity sensing technology for retail industry, particularly, a commodity sensing system based on weight monitoring and a commodity sensing method based on weight monitoring.

### BACKGROUND

In the traditional shopping mode of the retail industry, every supermarket or convenience store needs specialized salesmen and cashiers, and the labor cost is high. With the development of electronic payment technology, identity recognition technology and cloud computing technology, unmanned supermarket projects have high feasibility in technology. In the unmanned supermarket project, a basic problem to be solved urgently is the problem of determination and recording of the goods selected and purchased by the user, and specifically, the server needs to accurately determine the type, quantity and unit price of goods which are taken from the shelf by each user, so as to perform automatic settlement for the user.

Commodities purchased by a user may be determined with RFID technology. An RFID tag needs to be set on each item, and an RFID reader is arranged at a gate, so that commodities purchased may be recorded when a user leaves an RFID detection gate. The scheme has the following deficiencies. Firstly, the hardware cost is high. The price of each RFID tag is about 0.5-1 yuan. The tag increases the cost of each commodity, and reduces the competitiveness of a supermarket. For goods with the cost of 5 yuan, setting the RFID tag increases the cost of the goods by 10-20%. Secondly, there is the possibility that the tags may be shielded and removed in the commodity sensing. A user may deceive the RFID reader, resulting in the loss of the goods. Thirdly, the settlement can only be performed at the supermarket gate access control. If the user eats the edible goods before leaving the store and leaves the package in the supermarket, the RFID reader cannot sense and determine the real consumption amount of the user. That is, the scheme highly depends on the self-discipline and morality of users, and is not restricted by technical means, and thus this kind of unmanned supermarket has a high operational risk.

US 2015/0127496 A1 describes an inventory security system for determining the location of a container and the location of a storage device that stores a particular item. A determination is made that the particular item is placed in the container. The locations of the particular item and the container are tracked as the container moves through a premises. For a purchase-related transaction, a determination is made whether the location of the particular item corresponds to the location of the container. If the location of the particular item corresponds to the location of the container, a cost for the particular item is included in the purchase-related transaction. If not, the cost for the particular item is not included in the purchase-related transaction, and the location of the particular item is accounted for.

### SUMMARY

The present disclosure aims to provide a commodity sensing technique based on weight monitoring, which can solve the technical problems of poor sensing accuracy of goods picking or placing status, high monitoring error, high cost, and easy loss of goods in the prior art.

According to a first aspect of the disclosure, there is provided a commodity sensing system based on weight monitoring, including: a goods database generation unit that generates a goods database; at least one shelf, wherein each shelf includes at least one rack, and at least one item of goods is placed on each rack; a weight acquisition unit that collects a real-time weight sensing value of each rack in real time; a pick or place status judgment unit that determines whether a weight sensing value of each rack changes or not, wherein if the weight sensing value of a rack becomes smaller, it determines that there are goods taken away from the rack; and if the weight sensing value of the rack becomes larger, it determines that goods have been put back on the rack; a goods database updating unit that stores the real-time weight sensing value in the goods database, so as to update the weight sensing value of each rack in the goods database; an image identification system having at least one image sensor positioned at the top of a closed space, facing downwards, and having a field of view covering the entire bottom surface of the closed space, wherein the at least one image sensor is configured to monitor positions of users within the closed space; a shopping user judgment system that determines, on the basis of the monitored positions of the users when the goods were taken away from or put back on the rack, an identity of the user who took away or put back the goods; and a shopping information recording unit that records a type and quantity of the goods taken away by each user.

The commodity sensing system based on weight monitoring includes: a shelf, where each shelf includes at least one rack, and at least one item of goods is placed on each rack. In embodiments, a weight sensing device is disposed under each rack and connected to the weight acquisition unit.

Further, in some embodiments, the goods database generation unit may include: an initialization unit that initializes the goods database; an information input unit that enters a weight value and goods information of each item of the goods, and stores the weight value and the goods information in the goods database; and a value initialization unit that collects the weight sensing value of each rack after the goods are placed thereon, and stores the weight sensing value in the goods database.

Further, in some embodiments, the pick or place status judgment unit may include: a weight difference calculation unit that calculates a difference value between the real-time weight sensing value of each rack collected in real time and the weight sensing value of the same rack stored in the goods database, and records the difference value as a weight difference value of each rack; a weight difference judgment unit that compares the weight difference value of at least one rack with 0, in which when the weight difference value of a rack is less than 0, it determines that there are goods taken away from the rack; and when the weight difference value of the rack is greater than 0, it determines that there are articles placed on the rack; and a rack information recording unit that records a rack number of the rack and the weight difference of the rack when the weight difference of the rack is greater than 0 or less than 0.

Further, in some embodiments, when all goods on a same rack have a same type and a same weight, the pick or place status judgment unit may further include: a goods type determining unit that determines a type of the goods taken away from the rack according to the rack number of the rack and the goods information corresponding to the rack stored in the goods database; and a goods quantity calculating unit that calculates a ratio of an absolute value of the weight difference of the rack to the weight value of a single item of the goods on the rack, where the ratio is rounded by using a rounding method, to an integer which is a quantity of the taken goods.

Further, in some embodiments, the commodity sensing system based on weight monitoring may further include: a shopping user judgment system that determines an identity of a user who takes away or puts back the goods; and a shopping information recording unit that records a type and quantity of the goods taken by each user.

Further, in some embodiments, the shopping information recording unit may include: a shopping database generation unit that generates a shopping database of the user according to identity information of the user when the identity of the user is recognized; and a shopping database updating unit that generates, when the goods are taken away, shopping information according to the type and quantity of the taken goods and the identity information of the user who takes the goods, and stores the shopping information in the shopping database of the user, and generates, when the goods are put back, generates return information according to a type and quantity of the put-back goods and the identity information of the user who puts back the goods, and deletes the shopping information corresponding to the return information from the shopping database of the user.

According to a second aspect of the disclosure, there is provided a commodity sensing method based on weight monitoring of a commodity sensing system, the system comprising at least one shelf, wherein each shelf includes at least one rack, and at least one item of goods is placed on each rack, the method including: a goods database generation step for generating a goods database; a weight acquisition step for collecting a real-time weight sensing values of each rack in real time; a pick or place status judgment step for judging a pick or place status by determining whether a weight sensing value of each rack changes or not, where if the weight sensing value of a rack becomes smaller, it is determined that there are goods taken away from the rack; and if the weight sensing value of the rack becomes larger, it is determined that goods have been put back on the rack; a shopping database generation step for storing the real-time weight sensing value in the goods database, so as to update the weight sensing value of each rack in the goods database; returning to the weight acquisition step; an image identification step for monitoring, using at least one image sensor positioned at the top of a closed space, facing downwards, and having a field of view covering the entire bottom surface of the closed space, positions of users within the closed space; a shopping user judgment step for determining, on the basis of the monitored positions of the users when the goods were taken away from or put back on the rack, an identity of the user who took away or put back the goods; and a shopping information recording step for recording a type and quantity of the goods taken away by each user.

Further, in some embodiments, before the goods database generation step, the commodity sensing method may further include: a shelf setting step for placing at least one item of the goods on at least one rack of at least one shelf, where a same type of goods placed on a same rack has a same weight value and each weight value only corresponds to one type of goods; and a weight sensor setting step for setting a weight sensor under each rack and connecting to the weight acquisition unit.

Further, in some embodiments, the goods database generation step may include: an initialization step for initializing the goods database; an information input step for entering a weight value and goods information of each item of the goods, and storing the weight value and the goods information in the goods database; and a weight value initialization step for collecting the weight sensing value of each rack after the goods are placed thereon, and storing the weight sensing value in the goods database.

Further, in some embodiments, the pick or place status judgment step may include: a weight difference calculation step for calculating a difference value between the real-time weight sensing value of each rack collected in real time and the weight sensing value of the same rack stored in the goods database, and recording the difference value as a weight difference value of each rack; a weight difference judgment step for comparing the weight difference value of at least one rack with 0, in which when the weight difference value of a rack is less than 0, it is determined that there are goods taken away from the rack; and when the weight difference value of the rack is greater than 0, it is determined that there are articles placed on the rack; and an information recording step for recording a rack number of the rack and the weight difference of the rack when the weight difference of the rack is greater than 0 or less than 0.

Further, in some embodiments, when all goods on a same rack have a same type and a same weight, the pick or place status judgment step may further include: a goods type determining step for determining a type of the goods taken away from the rack according to the rack number of the rack and the goods information corresponding to the rack stored in the goods database; and a goods quantity calculating step for calculating a ratio of an absolute value of the weight difference of the rack to the weight value of a single item of the goods on the rack, where the ratio is rounded, by using a rounding method to an integer which is a quantity of the taken goods.

Further, in some embodiments, the commodity sensing method based on weight monitoring may further include: a shopping user judgment step for determining an identity of a user who takes away or puts back the goods; and a shopping information recording step for recording a type and quantity of the goods taken away by each user.

Further, in some embodiments, the shopping information recording step may include: a shopping database generation step for generating a shopping database of the user according to identity information of the user when the identity of the user is recognized; and a shopping database updating step for generating, when the goods are taken away, shopping information according to the type and quantity of the taken goods and the identity information of the user who takes the goods, and storing the shopping information in the shopping database of the user; and generating, when the goods are put back, return information according to a type and quantity of the put-back goods and the identity information of the user who puts back the goods, and deleting the shopping information corresponding to the return information from the shopping database of the user.

The disclosure provides a commodity sensing system based on weight monitoring and a commodity sensing method based on weight monitoring, which can monitor the real-time weight sensing value of the goods on the shelf in real time, sense the weight change of each rack in real time, deduce which kind of goods is taken away or put back according to the weight change of all racks on the shelf, and determine the kind and quantity of the taken away or put back goods. And the disclosure, when combining with the real-time position of the user and the preset placement position of each goods, may further determine the identity of the user who took away and put back the goods, and generate a shopping database which can record the category and quantity of the goods taken by each user to facilitate the direct settlement after shopping.

### BRIEF DESCRIPTION OF THE DRAWINGS

FIG. 1 is a top view of an unmanned supermarket according to an example of the disclosure;
FIG. 2 is a schematic view of an overall structure of a shelf according to an example of the disclosure;
FIG. 3 is a schematic structural view of a tray and a rack according to an example of the disclosure;
FIG. 4 is a schematic view of the structure of the rack according to an example of the disclosure;
FIG. 5 is a block diagram of a user identification system according to an example of the disclosure;
FIG. 6 is a block diagram of a user positioning system according to an example of the disclosure;
FIG. 7 is a diagram illustrating a distribution of an image sensor in a closed space according to an example of the disclosure;
FIG. 8 is a block diagram of a commodity sensing system based on weight monitoring according to an example of the disclosure;
FIG. 9 is a block diagram of a shopping user judgment system according to an example of the disclosure;
FIG. 10 is a block diagram of a shopping information recording unit according to an example of the disclosure;
FIG. 11 is a block diagram of a settlement system according to an example of the disclosure;
FIG. 12 is a flowchart of a commodity sensing method based on weight monitoring according to an example of the disclosure;
FIG. 13 is a flowchart illustrating a process of generating a goods database according to an example of the disclosure;
FIG. 14 is a flowchart illustrating a process of determining a pick or place status according to an example of the disclosure;
FIG. 15 is a flowchart illustrating a process of recording shopping information according to an example of the disclosure.

Reference numerals in the drawings are listed below:
1 closed space, 2 shelf, 3 bracket, 4 trays, 5 rack, 6 weight sensing device, 7 data processing equipment,
51 rack base, 52 rack plate, 53 plate notch, 54 rack slot,
100 customer identity recognition system, 101 access control device, 102 identification device, 1021 scanning device, 1022 identity acquisition unit, 103 user entrance, 104 user exit,
200 target positioning system, 201 3D image acquisition device, 202 target coordinate acquisition unit,
2011 image sensor, 2012 depth image sensor, 2013 RGB image sensor, 2014 3D image integration unit,
2021 coordinate system building unit, 2022 parameter acquisition unit, 2023 background removal unit, 2024 target coordinate calculation unit,
20221 sensor coordinate acquiring unit, 20222 relative coordinate acquiring unit, 20223 coordinate correcting unit,
300 commodity sensing system based on weight monitoring, 301 goods database generation unit, 302 weight acquisition unit, 303 pick or place status judgment unit, 304 goods database updating unit, 305 goods type deducing unit,
3011 initialization unit, 3012 information input unit, 3013 value initialization unit, 3031 weight difference calculation unit, 3032 weight difference judgment unit, 3033 rack information recording unit, 3034 goods type determining unit, 3035 goods quantity calculating unit;
500 shopping user judgment system, 501 good information storage unit, 502 rack coordinate storage unit, 503 rack-to-user matching judgment unit, 504 goods-to-user matching judgment unit,
600 shopping information recording unit, 601 shopping database generation unit, 602 shopping database update unit,
700 settlement system, 701 total amount calculation unit, 702 payment unit.

### DETAILED DESCRIPTION

Preferred embodiments of the disclosure will be described in detail below with reference to the accompanying drawings, so that the technical contents thereof will be clear and understood. The disclosure may be embodied in many different forms and should not be construed as limited to the embodiments set forth herein.

In the drawings, components having the same structure are denoted by the same numerals, and components having similar structures or functions are denoted by similar numerals. The terminology mentioned in the present disclosure, for example, up, down, front, back, left, right, inside, outside, top surface, bottom surface, side, top, bottom, front, rear, end, etc., are the directions in the drawings, and are only used to explain and illustrate the present disclosure, but not to limit the protection scope of the present disclosure.

When an element is referred to as being "on" another element, it can be directly on the other element; there may also be an intermediate element, the element being disposed on the intermediate element and the intermediate element being disposed on the other element. When an element is referred to as being "mounted to" or "connected to" another element, it is to be understood that the element is directly "mounted to" or "connected to" the other element or that the element is indirectly "mounted to" or "connected to" the other element through an intermediate element.

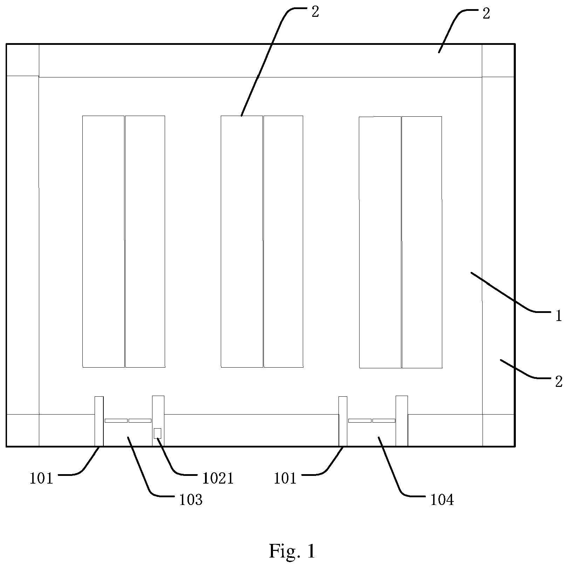

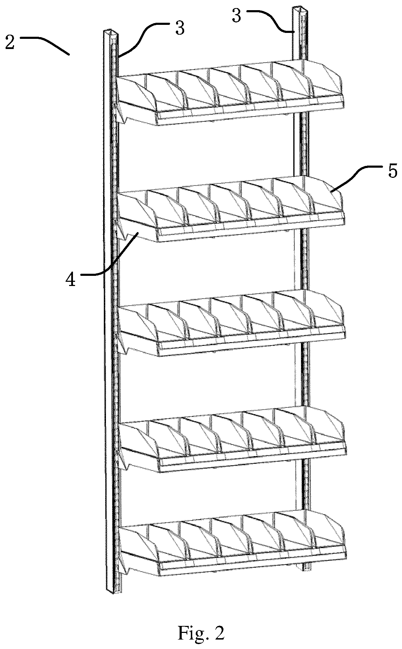

The example of the disclosure relates to a commodity sensing system based on weight monitoring which is a part of an unmanned vending system of an unmanned supermarket. Referring to FIGS. 1 to 3, the unmanned vending system includes a closed space 1, in which a plurality of shelves 2 are disposed; each shelf 2 includes a support 3 and a plurality of trays 4 detachably mounted on the support 3, and the plurality of trays 4 are parallel to each other at different heights or are flush with each other at the same height. Each tray 4 is provided with a plurality of racks 5 set in parallel, and at least one kind of goods is placed on each rack 5. The goods placed on the rack 5 of the present example are required to be easily taken out or put back by the user, and thus, the end of the rack 5 facing the user is used as the front end of the rack 5.

A weight sensing device 6, e.g., a rectangular weight sensor, is set between each rack 5 and tray 4, with a lower surface of one end connected to the tray 4 and an upper surface of the other end connected to the rack 5. Each weight sensing device 6 acquires the real-time weight sensing value of the rack 5 and goods on the upper surface of the rack 5, and senses every variation of the weight value of the rack 5 in time.

In this example, each rack 5 is an open box body, and can be placed with one or more kinds of goods. The goods are standard goods, and the appearance and weight of the same kind of goods are the same or similar. The same kind of goods placed on the same rack 5 have the same weight value, different kinds of goods have different weight values, and each weight value only corresponds to one kind of goods. The weight sensing devices 6 can accurately acquire the real-time weight sensing values of the racks 5 and goods on the upper surfaces of the racks 5, and accurately sense every variation of the weight value of each rack 5, including the increment or the decrement. When one goods is taken by a user, the weight value collected by the weight sensing device 6 under the rack 5 where the goods are placed will become smaller; and when one goods is put back by the user, the weight value collected by the weight sensing device 6 under the rack 5 where the goods are placed will become larger. The weight sensing device 6 can accurately acquire the weight variation value.

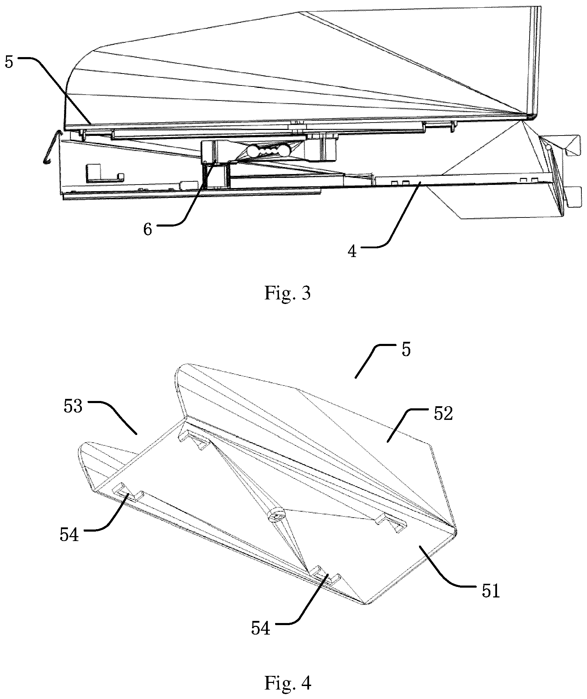

Referring to FIG. 4, in this example, the rack 5 includes a rack base 51, a rack plate 52 and a plate notch 53. The whole of rack 5 is approximately a cuboid, with a lower front height; and the rack base 51 is rectangular, and is used for placing goods. The rack plate 52 is in the shape of a rectangle or trapezoid or wedge, and is used for separating different kinds of goods and preventing mixing and dropping of the goods, so that when the weight value of goods on each rack is changed, the weight sensing device 6 can accurately sense it.

The example includes three rack plates 52 connected to one another, and connected to the left and right sides and the rear end of the rack base 51, respectively. The rack plates 52, in the shape of a trapezoid or wedge, are disposed at the left and right sides of the rack base 51, with the front end having a lower height, so that it is convenient for the user to pick and place the goods; the rack plate 52, in the shape of a rectangle, is disposed at the rear end of the rack base 51, and it prevents the goods from dropping, and also prevents the goods on different rack bases 51 from mixing up with one another, which may affect the monitoring of the weight value of the goods. In order to reduce waste of space, the rack plate 52 is kept perpendicular to the rack base 51 as much as possible.

The rack plate 52 connects to the edge of the rack base 51, and protrudes from the upper surface of the rack base 51. The plate notch 53 is formed between two opposite rack plates 52, and the plate notch 53 is disposed at the front of the rack base 51 and toward the user who is in front of the shelf, so that the user's hand can enter the space on the rack base where the goods are placed via this plate notch 53. It is convenient for the user to pick and place the goods.

The example further includes a data processing equipment 7, such as a server or a computer, and the data processing equipment 7 is provided with a plurality of data processing software, has a plurality of functional modules, and can be connected to a plurality of hardware through data lines, so as to implement a plurality of functions in a manner of combining the software and the hardware.

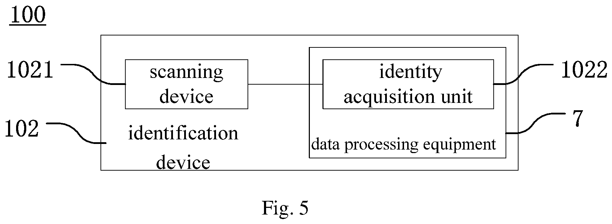

Referring to FIGS. 1 and 5, the example further includes a user identification system 100 for identifying the identity information of each user. The user identification system 100 includes an access control device 101 and an identification device 102. In this example, the closed space 1 is not an absolutely sealed space, but a relatively closed space, and the closed space 1 is provided with an access, e.g., a user entrance 103 and a user exit 104, where all users enter the closed space 1 through the user entrance 103 and leave the closed space 1 through the user exit 104.

Referring to FIGS. 1 and 5, each entrance and exit of the closed space 1 are provided with an access control device 101, e.g., an automatic door. The identification device 102 is used for acquiring the identity information of the user, and comprises a scanning device 1021 connected to the data processing equipment 7 and an identity acquisition unit 1022 in the data processing equipment 7. The scanning device 1021 is disposed inside or outside the access control device 101 at the user entrance 103, e.g., disposed on the outer surface of the automatic gate, and is used for scanning the identification code, e.g., a two-dimensional code; the identity acquisition unit 1022 is a functional module in the data processing equipment 7, and can acquire the identity information of the user according to the identity identification code. The access control device 101 at the exit 104 does not need to be provided with the identification device 102.

In this example, each user downloads a dedicated application software (APP) which matches an unmanned supermarket to a mobile communication terminal (a mobile phone, a tablet computer, or the like), registers an account in the application software (APP), and associates the account with payment software; or each user downloads payment software (such as WeChatPay/AliPay) into the mobile communication terminal, a small program which matches the unmanned supermarket is embedded into the payment software, an account is registered in the payment software, and user registration information and electronic payment information including user identity information, bank account information, payment passwords and the like is set in the special application software (APP) or the payment software. After the registration is completed, the user identity information will be stored in the user database of the data processing equipment 7.

Application software (APP) in the mobile communication terminal may generate a two-dimensional code, the two-dimensional code stores the identity information of the user, etc. When a certain user needs to enter the closed space 1 from the outside, the two-dimensional code generated by the application software is directly opposite to the scanning end of the scanning device 1021, the scanning device 1021 decodes the two-dimensional code after code scanning, and transmits the decoding result to the data processing equipment 7. If the two-dimensional code is identifiable and the identified identity information matches the identity information stored in the user database in advance, it is determined that the user identity is legal, and the access control device 101 is open to allow the user to enter the closed space 1. The access control device 101 at the user entrance 103 is provided with a sensing device, such as an infrared sensor, and when the user enters the closed space 1, the access control device 101 senses that someone has passed the access control and then automatically closes. When the user finishes shopping and needs to leave the closed space 1, the access control device 101 at the exit 104 senses that someone approaches the access control device 101 from the inside of the closed space 1, the access control device can be automatically opened, and after the user leaves the closed space 1, the access control device 101 senses that someone passed the access control device and then automatically closes.

After the identity acquisition unit 1022 obtains the identity information of the user according to the identity identification code, the data processing equipment 7 may generate a shopping database of the user, and obtain shopping information to update the shopping database according to each shopping behavior of the user during the shopping process of the user. Because the mobile communication terminal carried by the user carries out real-time data exchange with the data processing equipment 7 through the application software (APP), the shopping database of the user can also be displayed in the application software (APP) in the mobile communication terminal to generate a shopping cart interface, so that the user can know the shopping records and subsequent settlement details.

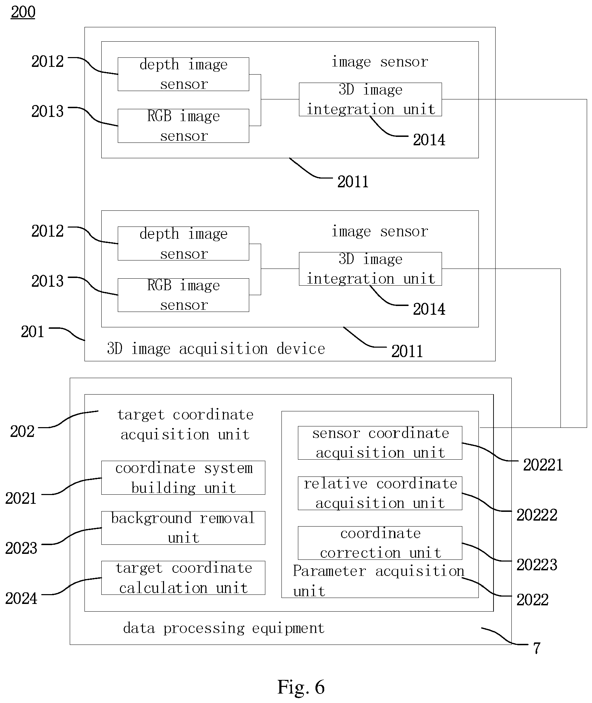

Referring to FIG. 6, the example further includes a target positioning system 200, which is used to acquire the real-time position of each target in the closed space 1, where the target object in this example is all or part of the user and its extension, and is used to obtain the group of coordinates of the whole or part (such as the head, the hand, etc.) of the user. The target positioning system 200 includes a 3D image acquisition device 201 which connects to the data processing equipment 7 and a target coordinate acquisition unit or a target coordinate generator 202 which is disposed inside the data processing equipment 7.

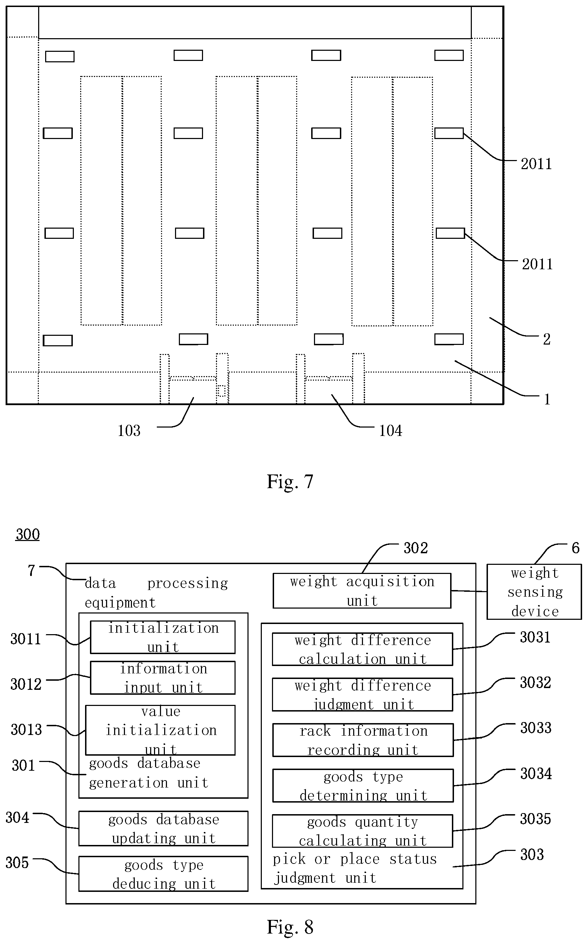

Referring to FIG. 7, the 3D image acquisition device 201 includes at least one image sensor 2011 for capturing at least one frame of 3D image in real time. The plurality of the image sensors 2011 are evenly distributed at the top of the closed space 1, the lenses of the image sensors 2011 face downwards, and the central axes of the lenses can be perpendicular to the horizontal plane or have a certain inclination angle. The field of view of the lenses of the image sensors 2011 covers the entire bottom surface of the closed space 1. When a user moves or does shopping in an unmanned supermarket, the user may be always under the monitoring of the image sensor. The 3D image acquired by the image sensor comprises a user image, and the user image refers to a picture of the whole or part of the body and the extension part of the user. If no one is in the closed space, the 3D image at each moment is the same as the previous moment, and the 3D image at the moment can be determined to be the background without any user images.

Each image sensor 2011 comprises a depth image sensor 2012 and an RGB image sensor 2013 which are set in parallel, and a 3D image integration unit or a 3D image integrator 2014, wherein the depth image sensor 2012 continuously acquires a plurality of frames of depth images; the RGB image sensor 2013 continuously collects a plurality of frames of RGB images, and the 3D image integration unit 2014 combines a frame of depth image and a frame of RGB image collected by the same image sensor 201 at the same time into a frame of 3D image.

The depth image sensor and the RGB image sensor acquire synchronously (simultaneously, and the acquisition frequency is the same), the image sensor 2011 can acquire RGB images and depth images with the same number of frames per second, and the 3D image integration unit 2014 can continuously acquire a plurality of frames of 3D images per second and transmit the 3D images to the target coordinate acquisition unit 202 of the data processing equipment 7.

The target coordinate acquisition unit 202 is a functional module in the data processing equipment 7, establishes a 3D coordinate system in the closed space, and obtains coordinates or a group of coordinates of the user in the 3D coordinate system in real time according to the continuous multi-frame 3D images including the user images. The target coordinate acquisition unit 202 includes a coordinate system building unit or a coordinate system builder 2021, a parameter acquisition unit or a parameter acquirer 2022, a background removal unit or a background remover 2023, and a target coordinate calculation unit or a target coordinate calculator 2024. The coordinate system building unit 2021 establishes the 3D coordinate system in the closed space 1, e.g., by selecting a center point of a bottom surface (a ground surface of an unmanned supermarket) of the closed space as an origin of the coordinate system, and setting an X axis and a Y axis in a horizontal direction and a Z axis in a vertical direction.

Because all or part of the body of the user occupies a larger space in the 3D coordinate system, the position of the user can be represented by a group of coordinates (i.e., coordinates of a number of points). To accurately control and conveniently calculate the position, the position of the user may also be represented by the coordinates of a specific point in the group of coordinates, for example, the position of the user can be represented by the coordinates of the highest point (the point having the largest Z-axis numerical value) in the group of coordinates of the user.

The parameter acquisition unit 2022 processes the continuous multi-frame 3D images including the user images, and obtains the position parameters and the color parameters of each pixel point of each frame of 3D image; the position parameters are x, y and z, and represent the coordinates (the coordinates of the position) of the pixel point under the 3D coordinate system; the color parameters are r, g and b, and respectively represent the intensities of the three primary colors of the pixel point. When a user moves into the field of view of any image sensor, the data processing equipment 7 may acquire a plurality of frames of 3D images, each frame of 3D image includes a user image and a background image, and each pixel may be a part of the user or a part of the background.

In the 3D images acquired by different image sensors, pixel points which represent the same positions of the user body and the extension parts thereof are the same in color parameters r, g and b. Because the distances between the image sensors at different positions and the user are different, the primary position parameters directly acquired by each image sensor are the position coordinates of a point on the body of the user and the extension part thereof relative to the image sensor, so a coordinate transformation is required to convert the primary position parameters acquired by the image sensors at different positions into the position parameters under the 3D coordinate system established in the closed space.

The parameter acquisition unit 2022 includes a sensor coordinate acquisition unit or a sensor coordinate acquirer 20221, a relative coordinate acquisition unit or a relative coordinate acquirer 20222, and a coordinate correction unit or a coordinate corrector 20223. The sensor coordinate acquisition unit 20221 acquires coordinates of a center point of an image sensor that acquires the frame of 3D image (e.g., a midpoint of a connecting line between the center points of the lenses of the depth image sensor 2012 and the RGB image sensor 2013 arranged in parallel) in the 3D coordinate system established in the closed space; the relative coordinate acquisition unit 20222 establishes a second 3D coordinate system by taking the central point of the image sensor as a second origin, wherein the directions of the X axis, the Y axis and the Z axis of the second 3D coordinate system are the same as the 3D coordinate system, and acquires the coordinates of each pixel point in the second 3D coordinate system from the 3D image; the coordinate correction unit 20223 is configured to calculate and correct the coordinates of each pixel of the 3D image in the 3D coordinate system according to the coordinates of the image sensor center point in the 3D coordinate system and the coordinates of each pixel of the 3D image in the second 3D coordinate system, so as to obtain the position parameters of each pixel of the user and the extension portion thereof.

In continuously collected M frames of 3D images, each frame of 3D image comprises and only comprises an image of a user, if the color parameters of N pixel points which belong to different 3D images and have the same position parameters are the same, and N is greater than 0.9*M and less than or equal to M, a background removal unit 2023 determines that the N pixel points are background pixel points, and removes N background pixel points from the M frames of 3D images to obtain M frames of background-free 3D images, namely the image of the user. In the continuously acquired 3D images, if the color parameters of the pixel points which belong to different 3D images and have the same position parameters are all the same, or most of these color parameters (such as 90% of all acquired 3D images) are the same, the position of the pixel point can be determined as the background, so that the pixel point can be removed from the corresponding 3D image.

In the target coordinate calculation unit 2024, if the target object is the whole of the user and the extension portion thereof, the set of the position parameters of all the pixel points in the M frames of the background-free 3D image are the group of coordinates of the whole of the user and the extension portion thereof; in the group of coordinate, the position parameters of the pixel point with the largest parameter z is defined as the coordinates of the user. In the continuously acquired 3D images, after background pixel points are removed, the remaining pixel points can represent the whole travel track of the user. The travel track may include footprints or other tracks of the user. If each frame of 3D image in the continuously acquired M frames of 3D images comprises images of a plurality of users, a 3D image which only comprises all or part of one user needs to be extracted from each of the M frames of 3D images.

If the target object is a part of the user and its extension, a group of coordinates of the part of the user, such as the head, shoulder, elbow, wrist, hand, etc., may be obtained. The depth image sensor 2012 and the RGB image sensor 2013 are respectively provided with a lens, the lens of the depth image sensor 2012 and the lens of the RGB image sensor 2013 are set in parallel and adjacent to each other, and if the central axes of the two lenses are set to be perpendicular to the horizontal plane, the two lenses overlook goods and users in the closed space. Normally, the two lenses can capture the group of coordinates of the head and the shoulder of the user, and when the user stretches out the hand, the group of coordinates of the arm, the elbow, the wrist and the hand of the user can be captured. If the head, the shoulder, the elbow, the wrist and the hand of the user at a certain moment are all connected into a fold line or a curve, the corresponding relation between the hand and the head position of the user can be established, namely, the position of a certain hand can be acquired in real time, and meanwhile, which user the hand belongs to can be determined.

Further, the field of view of the image sensor 2011 may cover a partial space outside the doorway, and when the user is outside the doorway, the image of the user may be acquired by the image sensor 2011. All processes of using the unmanned vending system by the user include an identity identification process at an entrance and an exit, a process of entering the closed space 1, a process of walking or staying in the closed space 1 and a process of leaving the closed space 1, and all the processes are under the monitoring of the image sensor 2011, so that the real-time position of a certain user with a known identity and a part of the body of the user in the closed space 1 can be monitored in real time. When the scanning device 1021 reads the two-dimensional code of the user, the data processing equipment 7 can obtain the identity information of the user, and the image sensor 2011 starts to track the position of the user in real time from the time when the scanning device 1021 reads the code, so as to monitor whether the user matches a certain shelf. When the image sensor 2011 cannot acquire the real-time 3D image of the user, it can be identified that the user ends shopping and then settlement is performed.

The example of the disclosure relates to a commodity sensing system 300 based on weight monitoring for sensing the picking and placing states of each kind of goods in real time, wherein the picking and placing states include a goods standing state, a taken-away state and a put-back state. Referring to FIG. 8, the commodity sensing system 300 based on weight monitoring includes a goods database generation unit 301, a weight acquisition unit 302, a pick or place status judgment unit 303, and a goods database updating unit 304. The four units are functional modules in the data processing equipment 7, and work together with the shelf 2 provided with the weight sensing device 6, so that the real-time weight sensing value of each rack 5 can be monitored, and whether goods are taken away or put back can be determined. When any kind of goods is removed or put back, the commodity sensing system 300 based on weight monitoring acquires the type and the quantity of the removed or put-back goods.

The goods database generation unit 301 is used for generating a goods database; the goods database comprises goods information of each item (each goods) and a weight sensing value of each rack for placing the goods, wherein the goods information comprises the type of the goods, the weight value of a single product, the rack number and the shelf number corresponding to the goods, the serial number of the goods, the name, the model, the net content, the unit price and the like.

The goods database generation unit 301 includes an initialization unit 3011, an information input unit 3012, and a value initialization unit 3013. The initialization unit 3011 is configured to perform initialization processing on the goods database, and establish the goods database in the memory of the data processing equipment 7. The information input unit 3012 is used for entering the weight value and the goods information of each item of goods, and storing the weight value and the goods information in the goods database, and the weight value of each type of goods on the shelf of the unmanned supermarket is entered in the goods database by using a keyboard or a code scanner. The value initializing unit 3013 is configured to collect the weight sensing value of each rack after the goods are placed thereon, and store the weight sensing value in the goods database.

In the unmanned supermarket arranging process, for example, after a plurality of goods of the same kind and weight are placed on each rack 5, the goods information is entered into the data processing equipment 7 and stored in the goods database. Taking a certain brand of beverage as an example, eight bottles of a certain brand of beverage are placed on a certain rack, the weight of the rack is 100 g, the weight of each bottle of beverage is 200 g, the weight sensing value of the rack in the goods database after initialization is 1700 g, and information such as a product name (certain herbal tea), a net content (195 ml), a producing area (Guangdong), a unit price (5 yuan), a single product weight value (200 g), a shelf number (1), rack numbers (1-12), a goods serial number (025) et al. corresponding to the brand of beverage are also stored in the goods database.

The weight acquisition unit 302 is respectively connected to the weight sensing device 6 in each rack 5 through data lines to collect the real-time weight sensing value of each rack 5 in real time, for example, the collecting time interval is 0.1-0.2 seconds. The real-time weight sensing value is a sensing value of the weight sensor and before the goods are placed on the racks 5, it represents the weight of each rack; after the goods are placed on the rack 5, it represents the total weight value of the rack and the goods on the rack; and the real-time weight sensing value changes when goods are taken away from or put back to the rack 5.

In order to reduce errors, before the goods are placed on the rack 5 formally, calibration processing needs to be performed first, and the corresponding relation between the sensing value X of the weight sensor and the actual weight value Y of the goods placed on the rack is calculated by using standard balancing weights with different weight values. For example, the rack is firstly placed in the empty state, the sensing value X0 of the weight sensing device 6 (weight sensor) is obtained, and at the moment, the weight Y0 =0; then standard balancing weights with weight values of 500 g and 1000 g are respectively placed on the racks to obtain the sensing values X1 and X2 of the weight sensing device 6 (weight sensor), and the corresponding goods weight Y1=600g and the corresponding goods weight Y2 = 1000g. Using the formula Y (weight value of the goods) =k * X (sensor value) + b, the values of the three sets of parameters k, b are calculated and stored, and the set of parameters in which the deviation is relatively small is selected. In the subsequent real-time monitoring process, the sensor value collected each time by the weight sensing device 6 (weight sensor) in real time is used, in combination with the numerical values of the parameters k and b, to calculate the total weight of the existing goods on each rack.

The pick or place status judgment unit 303 is configured to determine whether the weight sensing value of each rack changes. If the weight sensing value of a rack becomes smaller, it determines that there are goods taken away from the rack; if the weight sensing value of the rack becomes larger, it determines that there are articles placed on the rack; and if the weight sensing value of the rack does not change, it means that there is no change at all for the goods on the rack, and the weight acquisition unit 302 performs real-time acquisition again. The pick or place status judgment unit 303 includes a weight difference calculation unit 3031, a weight difference judgment unit 3032, and a rack information recording unit 3033.

The difference value calculation unit 3031 calculates a difference value between the real-time weight sensing value of each rack acquired in real time and the weight sensing value of the same rack stored in the goods database, and records the difference value as the weight difference value of each rack. For example, in the above example, if the weight of the rack on which the beverage of a certain brand is placed changes to 1300g or 1900g, the weight difference will be recorded as -400g or 200g, respectively.

The weight difference judgment unit 3032 compares the weight difference value of at least one rack with 0; when the weight difference value of one rack is less than 0, it determines that there are goods taken away from the rack; when the weight difference value of the rack is greater than 0, it determines that there are articles placed on the rack, but it cannot be determined whether the articles are the goods that are taken by the user from the shelf before, and the articles may also be the personal belongs of the user or other goods. For example, in the foregoing example, a weight difference of -400g can be considered as a removal of the goods; and in the case where the weight difference is 200 g, it may be determined that there are articles placed on the shelf.

When the weight difference of a rack is greater than 0 or less than 0, the rack information recording unit 3033 records the rack number of the rack and the weight difference of the rack. For example, if the weight difference in the previous example is -400 g, the weight of the rack is known to be decreased and the rack number is recorded (1-12). If the weight difference value in the previous example is 200 g, as the weight sensing value of the rack in the initial state is known to be 1700 g, the articles placed on the rack are not necessarily the goods originally on the shelf, thereby the articles are likely to be the goods originally belonging to other racks or the personal belongs carried by the user, and an alarm signal can be selectively generated to remind the manager or the user, and if necessary, the rack number of the rack can be displayed on a certain display for the manager or the user to process in time.

The pick or place status judgment unit 303 further includes a goods type determining unit 3034 and a goods quantity calculating unit 3035. When the weight difference of one rack is less than 0, the goods type determining unit 3034 determines the type of the taken goods according to the rack number and the goods information corresponding to the rack stored in the goods database. For example, if the number of the rack is known as (1-12), if only one kind of goods is placed on each rack, the kind of the goods can be determined to be a certain herbal tea, and other goods information such as a weight value of a single product (200 g), a net content (195 ml), a place of origin (Guangdong), a unit price (5 yuan) and the like can be correspondingly found. If the rack is used for placing various goods, the possible types and the quantity of the taken goods can be determined primarily according to the weight difference value.

When the weight difference of one rack is less than 0, if only one kind of goods is placed on each rack, the goods quantity calculating unit 3035 calculates the ratio of the absolute value of the weight difference of one rack to the weight value of a single item of goods on the rack stored in the goods database, and the ratio is rounded, by using a rounding method, and the obtained integer is the quantity of the taken goods. For example, the weight difference in the previous example, 400 grams, with an absolute value of 400 grams, the ratio of this value to the weight of one item (200 grams) is 2, and thus 2 is the quantity of the goods removed. Because small weight difference values may exist among a plurality of goods of the same type, the ratio after direct calculation is not necessarily an integer and may approach to a certain integer, so that a rounding processing needs to be performed on the ratio by utilizing a rounding method, and the type and the quantity of the taken goods can be determined.

In an ideal state, if the user is a person of high integrity, the goods can be correctly put back to the original shelf every time the goods are put back. Optionally, a reminder may be displayed on the wall of the unmanned supermarket which reminds the user that the amount of settlement may be higher than the actual consumption amount due to errors in the shopping record caused by misplacement of goods, forcing the user to put back the goods on the original shelf whenever the goods are put back. When the weight difference of a rack is greater than 0, the goods type determining unit 3034 determines the type of the goods to be returned according to the rack number and the goods information corresponding to the rack. The goods quantity calculating unit 3035 calculates the ratio of the absolute value of the weight difference of the rack to the weight value of the goods corresponding to the rack, and performs a rounding processing on the ratio by using a rounding method, so that the obtained integer is the number of the goods to be placed back.

The goods database updating unit 304 is configured to store the real-time weight sensing value in the goods database as a new weight sensing value to update the weight sensing value of each rack in the goods database for next calling and determination.

The commodity sensing system 300 based on weight monitoring of this example has the advantages of providing a weight monitoring-based commodity sensing scheme, which can monitor the real-time weight sensing value of the goods on the shelf in real time, sense the weight change of each rack in real time, deduce which kind of goods is taken away or put back according to the weight change of all racks on the shelf, and determine the kind and quantity of the taken away or put back goods.

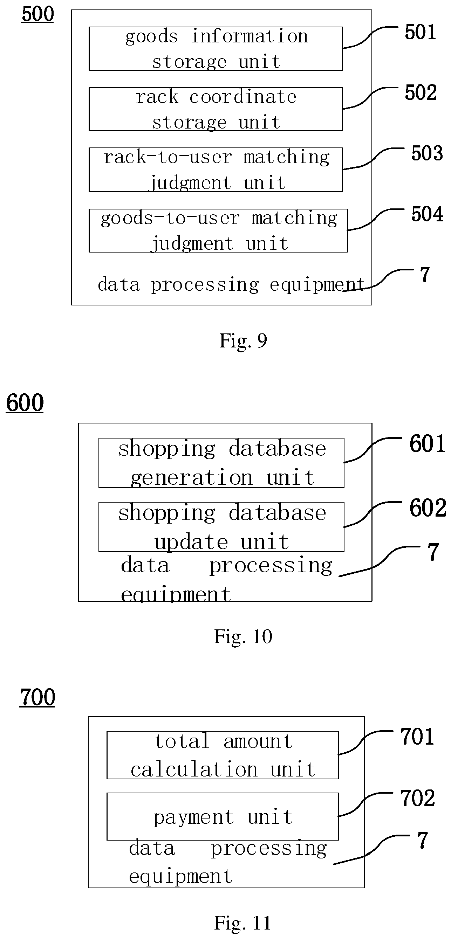

Referring to FIG. 9, the example further includes a shopping user judgment system 500, which is a functional module in the data processing equipment 7, for determining the identity of the user who takes away or puts back the goods according to the identity information of the user and the real-time location of the user when any kind of goods is taken or put back. The shopping user judgment system 500 includes a goods information storage unit 501, a rack coordinate storage unit 502, a rack-to-user matching judgment unit or a rack-to-user matching judger 503, and a goods-to-user matching judgment unit or a goods-to-user matching judger 504.

The goods database generated or updated by the goods database generation unit 301 and the goods database update unit 304 in the commodity sensing system 300 based on weight monitoring is stored in the goods information storage unit 501, and the goods database includes goods information of each item of goods.

The target positioning system 200 establishes a 3D coordinate system in the closed space, and since the positions of the shelves 2 and the racks 5 are determined, the coordinates of each shelf 2 and each rack 5 can be obtained after the coordinate system is established, groups of the shelf coordinates and the rack coordinates are stored in the rack coordinate storage unit 502, and the height (for example, 30 CM) of the rack space above the rack for placing the goods is set, so that a group of coordinates of the rack space can be obtained.

The target coordinate acquisition unit 202 may obtain a real-time group of coordinates of each user's hand with known identity, and when there is an intersection between the group of coordinates of the rack space above a rack 5 and the group of coordinates of a user's hand, the rack-to-user matching judgment unit 503 determines that the rack 5 matches the user, and may consider that the user stretches the hand into the shelf space above the rack 5; if the weight sensing value of the rack becomes larger, it means that there are articles placed on the shelf; and if the weight sensing value of the rack becomes smaller, it means that there are goods taken by user from the shelf.

When goods are removed from or placed on a rack and a user matches the rack at the same time, the goods-to-user matching judgment unit 504 determines that the goods match the user, and the goods are removed from or placed on the rack by the user at this time, thereby determining the identity of the user.

Referring to FIG. 10, the example further includes a shopping information recording unit or a shopping information recorder 600, which is a functional module in the data processing equipment 7, for generating at least one shopping database according to the identity information of each user, so as to record the category and quantity of at least one item taken by each user. The shopping information recording unit 600 includes a shopping database generation unit or a shopping database generator 601 and a shopping database update unit or a shopping database updater 602.

When the identity of a user is recognized by the user identification system 100, the identity acquisition unit 1022 acquires the identity information of the user, and the shopping database generation unit 601 generates the shopping database of the user in the data processing equipment 7 according to the identity information of the user, and the shopping database in the initial state has no shopping information.

The shopping database updating unit 602 generates a set of shopping information including the type and quantity of the goods removed at the moment and the goods information of the goods, such as the name, model, net content, unit price, etc., according to the type and the quantity of the goods removed and the identity information of the user who removes the goods, and stores the set of shopping information in the shopping database of the user. After the user takes away goods in the closed space 1 for many times, a plurality of groups of shopping information are included in the shopping database, and the mobile communication terminal carried by the user is connected with the data processing equipment 7 in a wireless communication mode and carries out data exchange, so the shopping information in the shopping database can also be displayed on an APP interface of the mobile communication terminal of the user.

When the goods match a user, if the real-time weight sensing value of a rack 5 is monitored to be increased by the commodity sensing system 300 based on weight monitoring, the weight difference value of the shelf is greater than 0, which indicates that there are articles placed on the shelf, and it can be determined that whether the articles are purchased goods or not.

The example further includes a goods type deducing unit 305, the shopping information in the shopping database of the user is inquired, and whether the weight value of the purchased goods match the weight difference value of the rack is determined, that is, determining whether the total weight of one or more purchased goods is the same as the weight difference value of the rack. If so, the possible types and the quantity of the goods can be preliminarily determined. For example, if the weight difference of the rack is 200 g, and the purchased goods only includes two pieces of goods A of 100 g, it can be determined primarily that the articles placed back to the rack are two pieces of goods A. If it occurs that the goods are misplaced by user, that is, some users have placed goods that do not belong to a certain rack on that rack, the goods type deducing unit 305 can determine the possible type and quantity of the goods according to the shopping information in the shopping database of user. Because the space of the rack 5 is relatively small, and generally, it is hard for the user to misplace many pieces of goods, the example has the better judgment for simple misplacement. In other examples, a commodity sensing system based on image monitoring with multiple cameras facing the space in front of the shelf may be arranged to monitor the process of taking or placing of each item of the goods, and to work with the commodity sensing system based on weight monitoring to further deduce the type and quantity of the goods taken away or placed back.

Further, the commodity sensing system can also determine whether the type of the goods put back on the rack with the increased real-time weight sensing value is consistent with the type of the original goods on the rack, and if not, an alarm signal can be selectively generated to remind a manager or a user.

If the commodity sensing system 300 based on weight monitoring cannot determine the type of goods placed back, that is, it can be determined that the articles placed back to the rack are not the existing goods in the unmanned supermarket, and may be the personal belongs carried by the user, such as an umbrella, a mobile phone, etc., and an alarm signal can be selectively generated to remind the manager or the user, and if necessary, the rack number of the rack can be displayed on a display for the manager or the user to process in time.

Referring to FIG. 11, the example further includes a settlement system 700, which is a functional module in the data processing equipment 7, for settling a fee according to the type and quantity of all goods in the shopping database of the user. After the shopping process of the user is finished, the user can leave the closed space 1 from the access control device at the entrance/exit. When the image sensor 2011 of the target positioning system 200 cannot acquire the real-time 3D image of the user, it can be determined that the user has finished shopping, and the settlement system 700 settles the fee for the user.

The settlement system 700 includes a total amount calculation unit 701 and a payment unit 702. When the user leaves the closed space, the total amount calculation unit 701 calculates the total amount according to the type and the quantity of all the goods in the shopping database of the user, and since the unit price of each type of goods is pre-stored in the data processing equipment 7 as goods information, the sum of the products of the unit prices and the corresponding quantity of various goods is the total amount that the user needs to pay. Further, in other examples, the user may enjoy discounts on goods or use coupons, etc. for which the total amount the user needs to pay is the sum of the products of the various unit prices and quantities of the goods minus the coupon and/or coupon amount and/or the discount amount. The payment unit 702 is payment software or third party payment software provided by the settlement system 700, and can deduct money from the bank account or the electronic account of the user, and the deducted money amount is the same as the total amount that the user needs to pay.

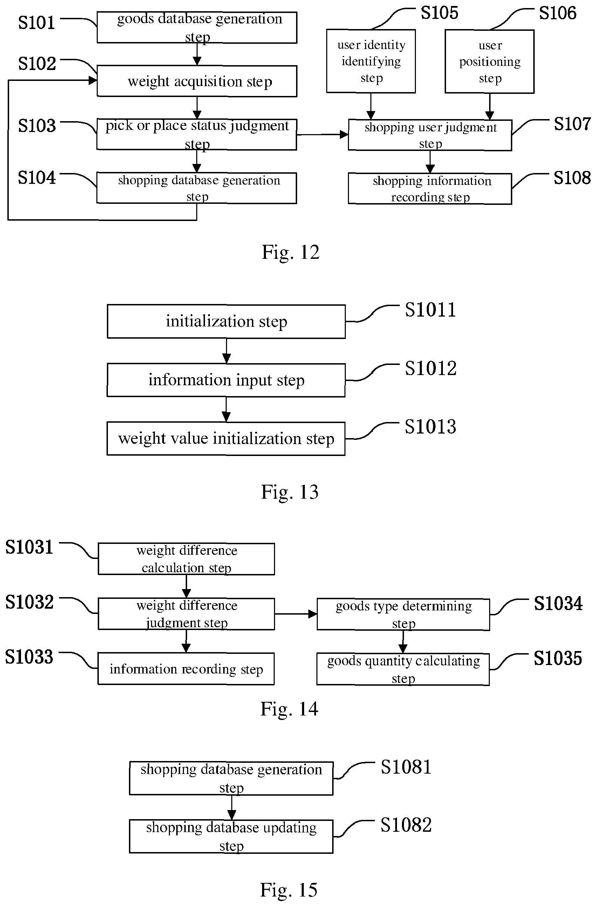

The example also provides a commodity sensing method based on weight monitoring, that is, a commodity sensing method based on weight monitoring. Referring to FIG. 12, the commodity sensing method based on weight monitoring includes the following steps S101) to S108).

Step S101) a goods database generation step, which is used for generating a goods database. The goods database comprises goods information of each item of goods (each goods) and a weight sensing value of each rack for placing the goods, wherein the goods information comprises the type of the goods, the weight value of a single product, the rack number and the shelf number corresponding to the goods. Referring to FIG. 13, the step S101) of the goods database generation step includes the following steps: step S1011) an initialization step, initializing the processing on the goods database; step S1012) an information input step, is used for entering the weight value and the goods information of each item, storing the weight value and the goods information in the goods database; step S1013) a weight value initialization step, which is configured to collect the weight sensing value of each rack after the goods are placed thereon, and storing the weight sensing value in the goods database. Taking a certain brand of beverage as an example, eight bottles of a certain brand of beverage are placed on a certain rack, the weight of the rack is 100 g, the weight of each bottle of beverage is 200 g, and thus the weight sensing value of the rack in the goods database after initialization is 1700 g; and information such as a product name (certain herbal tea), a net content (195 ml), a producing area (Guangdong), a unit price (5 yuan), a single product weight value (200 g), a shelf number (1), rack numbers (1-12), a goods serial number (025) etc. corresponding to the brand of beverage is also stored in the goods database.

Step S102) a weight acquisition step, which is used for collecting the real-time weight sensing value of each rack in real time, where the real-time weight sensing value is a sensing value of the weight sensor. In step S102) of the weight acquisition step, the collecting time interval is 0.1-0.5 seconds.

Step S103) a pick or place status judgment step, which is used for determining whether the weight sensing value of each rack changes or not, and if the weight sensing value of a rack becomes smaller, it is determined that there are goods taken away from the rack; and if the weight sensing value of the rack becomes larger, it is determined that there are articles placed on the rack. If the weight sensing value of the rack does not change, it means that there is no change at all for the goods on the shelf, then returns to the step S102) of the weight acquisition step and performs real-time acquisition again.

Referring to FIG. 14, step S103) of the pick or place status judgment step includes the following step S1031) to S1033) . Step S1031) a weight difference calculation step, which is used for calculating a difference value between the real-time weight sensing value of each rack acquired in real time and the weight sensing value of the same rack stored in the goods database, and recording the difference value as a weight difference value of each rack. For example, in the above example, if the weight of the rack on which the beverage of a certain brand is placed changes to 1300g or 1900g, the weight difference will be recorded as -400g or 200g, respectively. Step S1032) a weight difference judgment step, which is used for comparing the weight difference value of at least one rack with 0; when the weight difference value of a rack is less than 0, it is determined that there are goods taken away from the rack; and when the weight difference value of the rack is greater than 0, it is determined that there are articles placed on the rack, but it cannot be determined whether the articles are the goods that have been taken by the user from the shelf before, and the articles may also be the personal belongs of the user or other goods. For example, in the foregoing example, a weight difference of -400g may be considered as a removal of the goods; and in the case where the weight difference is 200 g, it is determined that articles are placed on the shelf. Step S1033) an information recording step, whenever the weight sensing value on the rack changes, the weight difference of a rack is greater than 0 or less than 0, step S1033) records the rack number and the weight difference of the rack. For example, if the weight difference in the previous example is -400 g, the weight of the rack is known to be decreased and the rack number (1-12) is recorded. If the weight difference value in the previous example is 200 g, as the weight sensing value of the rack in the initial state is known to be 1700 g, the articles placed on the rack are not necessarily the goods originally on the shelf, thereby the articles are likely to be the goods originally belonging to other racks or the articles carried by the user, such as an umbrella or a mobile phone, and an alarm signal can be selectively generated to remind the manager or the user.

Referring to FIG. 14, if there are goods taken away from a rack, step S103) of the pick or place status judgment step further includes S1034) to S1035) . Step S 1034) a goods type determining step, when the weight difference of one rack is less than 0, step S1034) is used for determining the type of the goods taken away from the rack according to the rack number and the goods information corresponding to the rack stored in the goods database. For example, if the number of the rack is known as (1-12), since only one kind of goods is placed on each rack, the kind of the goods thus may be determined to be a certain herbal tea, and other goods information such as a weight value of a single product (200 g), a net content (195 ml), a place of origin (Guangdong), a unit price (5 yuan) and the like may be correspondingly found. Step S1035) a goods quantity calculating step, which is used for calculating the ratio of the absolute value of the weight difference of one rack to the weight value of a single item of the goods on the rack stored in the goods database. The ratio is rounded by using a rounding method, and the obtained integer is the quantity of the taken goods. For example, the weight difference in the previous example, 400 grams, with an absolute value of 400 grams, the ratio of this value to the weight of the item (200 grams) is 2, and thus 2 is the quantity of the goods removed. Because small weight difference values may exist among a plurality of goods of the same type, the ratio after direct calculation is not necessarily an integer and may approach to a certain integer, so that a rounding processing needs to be performed on the ratio by utilizing a rounding method, and the type and the quantity of the taken goods may be determined.

Step S104) a shopping database generation step, which is used for storing the real-time weight sensing value in the goods database, and forming a new weight sensing value to update the weight sensing value of each rack in the goods database; the process returns to step S102) of the weight acquisition step, and when the weight sensing value of a certain rack changes, the above steps are repeated. In the above steps of S102) to S103) after each judgment finishes, the new real-time weight sensing value is stored in the goods database to replace the original weight sensing value for next calling and determination.

Referring to FIG. 12, the commodity sensing method based on weight monitoring further includes the following step: step S105) a user identity identifying step, which is used for identifying identity information of each user; step S106) a user positioning step, which is used for acquiring the real-time position of each user in the closed space; step S107) a shopping user judgment step which, when a certain goods is taken away or placed back, is used for determining the identity of the user who takes away or puts back the goods according to the identity information of the user and the real-time position of the user. If the weight sensing value of a certain rack changes, and there is an intersection between the group of coordinates of the rack space above the rack and the group of coordinates of the hand of the user, i.e., the rack matches the user, then it is determined that goods are taken from or placed on the rack by the user, and a shopping action is completed; step S108) a shopping information recording step, which is used for generating a shopping database according to the identity information of each user, and recording a type and quantity of the goods taken by each user when the shopping action occurs.

Referring to FIG. 15, step S108) of the shopping information recording step includes step S1081) a shopping database generation step which, when the identity of a user is identified, generates the shopping database of the user according to the identity information of the user; and step S1082) a shopping database updating step which, when the goods are taken away, generates the shopping information according to the type and quantity of the taken goods and the identity information of the user who takes away the goods, and stores the shopping information in the shopping database of the user; and when the goods are put back, generates return information according to the type and the quantity of the put-back goods and the identity information of the user who puts back the goods, and deletes the shopping information corresponding to the return information from the shopping database of the user. In the data processing equipment, each user has a corresponding shopping database, when a type of goods is taken by user, the goods information of the goods and the quantity of the taken goods are entered into the user's shopping database as shopping information for the user to settle the fee after finished shopping. When a type of goods is placed back by user, the goods information of the goods and the quantity of the placed back goods are used to generate return information, and the shopping information corresponding to the return information is deleted from the shopping database of the user.

In the above example, when two bottles of beverages are taken by a user, the real-time weight value corresponding to the rack (1-12) in the goods database has been updated to 1300 g, and the goods information and quantity of two bottles of beverages (certain herbal tea) are stored in the shopping database of the user. After that, if the data acquisition unit 102 collects the real-time weight value of the rack (1-12) being 1500 g, the weight difference of the rack (1-12) is 200 g; step S103) the pick or place status judgment step is executed, and determines there are articles placed on the rack; step S104) the database updating step is executed, and the real-time weight value corresponding to the rack (1-12) in the goods database has been updated to 1500 g. Step S107) shopping user judgment step is executed, and determines the identity of the user who placed the goods; step S108) the shopping information recording step is executed, and if there is only one piece of goods of 200 g in the shopping database of the user, it can be determined that the goods that has been placed back is a bottle of beverage (certain herbal tea) which was taken away before by the user, and the quantity of the beverages in the shopping database of the user is reduced from 2 to 1. Similarly, if the weight difference of the rack (1-12) is 400 g, the quantity of the beverages in the shopping database of the user is reduced from 1 to 0, or all the shopping records of the beverages (certain herbal tea) in the shopping database of the user are deleted, such as the goods information and quantity.

When the image sensor 2011 of the target positioning system 200 cannot acquire the real-time 3D image of the user, the data processing equipment 7 determines that the user has already left the area of the unmanned supermarket (the closed space 1), and the settlement system 700 automatically completes user settlement and payment according to all the data information recorded in the shopping database of the user.

The example provides a commodity sensing system based on weight monitoring and a commodity sensing method based on weight monitoring, which can monitor the real-time weight sensing value of the goods on the shelf in real time, sense the weight change of each rack in real time, deduce which kind of goods is taken away or put back according to the weight change of all racks on the shelf, and determine the kind and quantity of the taken away or put back goods. The disclosure may utilize the user's real-time position and the preset placement position of each goods to further deduce the identity of the user who takes away or puts back the goods, and generate a shopping database recording the category and quantity of the goods taken by each user to facilitate the direct settlement after shopping.

The foregoing are only some embodiments of the present disclosure which illustrate to those skilled in the art how to practice the disclosure. They are not intended to limit the scope of the disclosure. Those skilled in the art will appreciate that various modifications and adaptations can be made without departing from the principles of the present disclosure, and such modifications and adaptations should be considered as within the scope of the disclosure.

## Claims

1. A commodity sensing system based on weight monitoring, the system comprising:
a goods database generation unit that generates a goods database;
at least one shelf, wherein each shelf includes at least one rack, and at least one item of goods is placed on each rack;
a weight acquisition unit that collects a real-time weight sensing value of each rack in real time;
a pick or place status judgment unit that determines whether a weight sensing value of each rack changes or not, wherein if the weight sensing value of a rack becomes smaller, it determines that goods have been taken away from the rack; and if the weight sensing value of the rack becomes larger, it determines that goods have been put back on the rack;
a goods database updating unit that stores the real-time weight sensing value in the goods database, so as to update the weight sensing value of each rack in the goods database;
an image identification system having at least one image sensor positioned at the top of a closed space, facing downwards, and having a field of view covering the entire bottom surface of the closed space, wherein the at least one image sensor is configured to monitor positions of users within the closed space;
a shopping user judgment system that determines, on the basis of the monitored positions of the users when the goods were taken away from or put back on the rack, an identity of the user who took away or put back the goods; and
a shopping information recording unit that records a type and quantity of the goods taken away by each user.

2. A system according to claim 1, further comprising a weight sensing device disposed under each rack and connected to the weight acquisition unit.

3. A system according to claim 1, wherein the goods database generation unit comprises:
an initialization unit that initializes the goods database;
an information input unit that enters a weight value and goods information of each item of the goods, and stores the weight value and the goods information in the goods database; and
a value initialization unit that collects the weight sensing value of each rack after the goods are placed thereon, and stores the weight sensing value in the goods database.

4. A system according to claim 1, wherein the pick or place status judgment unit comprises:
a weight difference calculation unit that calculates a difference value between the real-time weight sensing value of each rack collected in real time and the weight sensing value of the same rack stored in the goods database, and records the difference value as a weight difference value of each rack;
a weight difference judgment unit that compares the weight difference value of at least one rack with 0, wherein when the weight difference value of a rack is less than 0, it determines that goods have been taken away from the rack; and when the weight difference value of the rack is greater than 0, it determines that articles have been placed on the rack; and
a rack information recording unit that records a rack number of the rack and the weight difference of the rack when the weight difference of the rack is greater than 0 or less than 0.

5. A system according to claim 4, wherein:
when all goods on a same rack have a same type and a same weight, the pick or place status judgment unit further comprises:
a goods type determining unit that determines a type of the goods taken away from the rack according to the rack number of the rack and the goods information corresponding to the rack stored in the goods database; and
a goods quantity calculating unit that calculates a ratio of an absolute value of the weight difference of the rack to the weight value of a single item of the goods on the rack, wherein the ratio is rounded, by using a rounding method, to an integer which is a quantity of the taken goods.

6. A system according to claim 1, further comprising:
a shopping user judgment system that determines an identity of a user who takes away or puts back the goods; and
a shopping information recording unit that records a type and quantity of the goods taken by each user.

7. A system according to claim 6, wherein the shopping information recording unit comprises:
a shopping database generation unit that generates a shopping database of the user according to identity information of the user when the identity of the user is recognized; and
a shopping database updating unit that generates, when the goods are taken away, shopping information according to the type and quantity of the taken goods and the identity information of the user who takes the goods, and stores the shopping information in the shopping database of the user;
wherein the shopping database updating unit generates, when the goods are put back, return information according to a type and quantity of the put-back goods and the identity information of the user who puts back the goods, and deletes the shopping information corresponding to the return information from the shopping database of the user.

8. A commodity sensing method based on weight monitoring of a commodity sensing system, the system comprising at least one shelf, wherein each shelf includes at least one rack, and at least one item of goods is placed on each rack, the method including:
a goods database generation step for generating a goods database;
a weight acquisition step for collecting a real-time weight sensing value of each rack in real time;
a pick or place status judgment step for judging a pick or place status by determining whether a weight sensing value of each rack changes or not, wherein if the weight sensing value of a rack becomes smaller, it is determined that goods have been taken away from the rack; and if the weight sensing value of the rack becomes larger, it is determined that goods have been put back on the rack;
a shopping database generation step for storing the real-time weight sensing value in the goods database, so as to update the weight sensing value of each rack in the goods database;
an image identification step for monitoring, using at least one image sensor positioned at the top of a closed space, facing downwards, and having a field of view covering the entire bottom surface of the closed space, positions of users within the closed space;
a shopping user judgment step for determining, on the basis of the monitored positions of the users when the goods were taken away from or put back on the rack, an identity of the user who took away or put back the goods; and
a shopping information recording step for recording a type and quantity of the goods taken away by each user.

9. A method according to claim 8, wherein, before the goods database generation step, the commodity sensing method further comprises:
a shelf setting step for placing at least one item of the goods on at least one rack of at least one shelf, wherein a same type of goods placed on a same rack has a same weight value and each weight value only corresponds to one type of goods; and
a weight sensor setting step for setting a weight sensor under each rack and connecting the weight sensor to the weight acquisition unit.

10. A method according to claim 8, wherein the goods database generation step comprises:
an initialization step for initializing the goods database;
an information input step for entering a weight value and goods information of each item of the goods, and storing the weight value and the goods information in the goods database; and
a weight value initialization step for collecting the weight sensing value of each rack after the goods are placed thereon, and storing the weight sensing value in the goods database.

11. A method according to claim 8, wherein the pick or place status judgment step comprises:
a weight difference calculation step for calculating a difference value between the real-time weight sensing value of each rack collected in real time and the weight sensing value of the same rack stored in the goods database, and recording the difference value as a weight difference value of each rack;
a weight difference judgment step for comparing the weight difference value of at least one rack with 0, wherein when the weight difference value of a rack is less than 0, it is determined that goods have been taken away from the rack; and when the weight difference value of the rack is greater than 0, it is determined that articles have been placed on the rack; and
an information recording step for recording a rack number of the rack and the weight difference of the rack when the weight difference of the rack is greater than 0 or less than 0.

12. A method according to claim 11, wherein, when all goods on a same rack have a same type and a same weight, the pick or place status judgment step further comprises:
a goods type determining step for determining a type of the goods taken away from the rack according to the rack number of the rack and the goods information corresponding to the rack stored in the goods database; and
a goods quantity calculating step for calculating a ratio of an absolute value of the weight difference of the rack to the weight value of a single item of the goods on the rack, wherein the ratio is rounded, by using a rounding method, to an integer which is a quantity of the taken goods.

13. A method according to claim 8, further comprising:
a shopping user judgment step for determining an identity of a user who takes away or puts back the goods; and
a shopping information recording step for recording a type and quantity of the goods taken away by each user.

14. A method according to claim 13, wherein the shopping information recording step comprises:
a shopping database generation step for generating a shopping database of the user according to identity information of the user when the identity of the user is recognized; and
a shopping database updating step for generating, when the goods are taken away, shopping information according to the type and quantity of the taken goods and the identity information of the user who takes the goods, and storing the shopping information in the shopping database of the user; and generating, when the goods are put back, return information according to a type and quantity of the put-back goods and the identity information of the user who puts back the goods, and deleting the shopping information corresponding to the return information from the shopping database of the user.

## Patentansprüche

1. Ein Warenerfassungssystem, das auf Gewichtsüberwachung basiert, wobei das System Folgendes beinhaltet:
eine Güterdatenbankerzeugungseinheit, die eine Güterdatenbank erzeugt;
mindestens ein Regal, wobei jedes Regal mindestens ein Fach umfasst und in jedem Fach mindestens ein Gütergegenstand platziert ist;
eine Gewichtsermittlungseinheit, die einen Echtzeitgewichtserfassungswert jedes Fachs in Echtzeit abliest;
eine Bestückungsstatusbeurteilungseinheit, die bestimmt, ob ein Gewichtserfassungswert jedes Fachs sich ändert oder nicht, wobei sie, wenn der Gewichtserfassungswert eines Fachs kleiner wird, bestimmt, dass Güter aus dem Fach genommen wurden; und sie, wenn der Gewichtserfassungswert des Fachs größer wird, bestimmt, dass Güter in das Fach zurückgelegt wurden;
eine Güterdatenbankaktualisierungseinheit, die den Echtzeitgewichtserfassungswert in der Güterdatenbank speichert, um den Gewichtserfassungswert jedes Fachs in der Güterdatenbank zu aktualisieren;
ein Bildidentifizierungssystem, das mindestens einen Bildsensor aufweist, der im oberen Bereich eines geschlossenen Raums positioniert ist und nach unten gerichtet ist und ein Sichtfeld aufweist, das die gesamte untere Oberfläche des geschlossenen Raums abdeckt, wobei der mindestens eine Bildsensor konfiguriert ist, um Positionen von Benutzern innerhalb des geschlossenen Raums zu überwachen;
ein Einkaufsbenutzerbeurteilungssystem, das auf der Basis der überwachten Positionen der Benutzer, wenn die Güter aus dem Fach genommen oder dahin zurückgelegt werden, eine Identität des Benutzers bestimmt, der die Güter genommen oder zurückgelegt hat; und
eine Einkaufsinformationsaufzeichnungseinheit, die einen Typ und eine Menge der Güter aufzeichnet, die von jedem Benutzer genommen werden.

2. System gemäß Anspruch 1, das ferner eine Gewichtserfassungsvorrichtung beinhaltet, die unter jedem Fach angeordnet ist und mit der Gewichtsermittlungseinheit verbunden ist.

3. System gemäß Anspruch 1, wobei die Güterdatenbankerzeugungseinheit Folgendes beinhaltet:
eine Initialisierungseinheit, die die Güterdatenbank initialisiert;
eine Informationseingabeeinheit, die einen Gewichtswert und Güterinformationen jedes Gütergegenstands einträgt und den Gewichtswert und die Güterinformationen in der Güterdatenbank speichert; und
eine Wertinitialisierungseinheit, die den Gewichtserfassungswert jedes Fachs abliest, nachdem die Güter darin platziert wurden, und den Gewichtserfassungswert in der Güterdatenbank speichert.

4. System gemäß Anspruch 1, wobei die Bestückungsstatusbeurteilungseinheit Folgendes beinhaltet:
eine Gewichtsunterschiedsberechnungseinheit, die einen Unterschiedswert zwischen dem Echtzeitgewichtserfassungswert jedes Fachs, der in Echtzeit abgelesen wird, und dem Gewichtserfassungswert desselben Fachs, der in der Güterdatenbank gespeichert ist, berechnet und den Unterschiedswert als einen Gewichtsunterschiedswert jedes Fachs aufzeichnet;
eine Gewichtsunterschiedsbeurteilungseinheit, die den Gewichtsunterschiedswert von mindestens einem Fach mit 0 vergleicht, wobei sie, wenn der
Gewichtsunterschiedswert eines Fachs kleiner als 0 ist, bestimmt, dass Güter aus dem Fach genommen wurden; und sie, wenn der Gewichtsunterschiedswert des Fachs größer als 0 ist, bestimmt, dass Artikel in dem Fach platziert wurden; und
eine Fachinformationsaufzeichnungseinheit, die eine Fachnummer des Fachs und den Gewichtsunterschied des Fachs aufzeichnet, wenn der Gewichtsunterschied des Fachs größer als 0 oder kleiner als 0 ist.

5. System gemäß Anspruch 4, wobei:
wenn alle Güter in einem selben Fach einen selben Typ und ein selbes Gewicht aufweisen, die Bestückungsstatusbeurteilungseinheit ferner Folgendes beinhaltet:
eine Gütertypbestimmungseinheit, die einen Typ der Güter, die aus dem Fach genommen werden, gemäß der Fachnummer des Fachs und den dem Fach entsprechenden Güterinformationen, die in der Güterdatenbank gespeichert sind, bestimmt; und
eine Güterenberechnungseinheit, die ein Verhältnis eines absoluten Werts des Gewichtsunterschieds des Fachs zu dem Gewichtswert eines einzelnen Gütergegenstands in dem Fach berechnet, wobei das Verhältnis durch Verwenden eines Rundungsverfahrens auf eine ganze Zahl gerundet wird, die eine Menge der genommenen Güter ist.

6. System gemäß Anspruch 1, das ferner Folgendes beinhaltet:
ein Einkaufsbenutzerbeurteilungssystem, das eine Identität eines Benutzers bestimmt, der die Güter nimmt oder zurücklegt; und
eine Einkaufsinformationsaufzeichnungseinheit, die einen Typ und eine Menge der Güter aufzeichnet, die von jedem Benutzer genommen werden.

7. System gemäß Anspruch 6, wobei die Einkaufsinformationsaufzeichnungseinheit Folgendes beinhaltet:
eine Einkaufsdatenbankerzeugungseinheit, die eine Einkaufsdatenbank des Benutzers gemäß Identitätsinformationen des Benutzers erzeugt, wenn die Identität des Benutzers erkannt wird; und
eine Einkaufsdatenbankaktualisierungseinheit, die, wenn die Güter genommen werden, Einkaufsinformationen gemäß dem Typ und der Menge der genommenen Güter und den Identitätsinformationen des Benutzers, der die Güter nimmt, erzeugt und die Einkaufsinformationen in der Einkaufsdatenbank des Benutzers speichert;
wobei die Einkaufsdatenbankaktualisierungseinheit, wenn die Güter zurückgelegt werden, Rückgabeinformationen gemäß einem Typ und einer Menge der zurückgelegten Güter und den Identitätsinformationen des Benutzers, der die Güter zurücklegt, erzeugt und die Einkaufsinformationen, die den Rückgabeinformationen entsprechen, aus der Einkaufsdatenbank des Benutzers löscht.

8. Ein Warenerfassungsverfahren, das auf Gewichtsüberwachung eines Warenerfassungssystems basiert, wobei das System mindestens ein Regal beinhaltet, wobei jedes Regal mindestens ein Fach umfasst und in jedem Fach mindestens ein Gütergegenstand platziert wird, wobei das Verfahren Folgendes umfasst:
einen Güterdatenbankerzeugungsschritt zum Erzeugen einer Güterdatenbank;
einen Gewichtsermittlungsschritt zum Ablesen eines Echtzeitgewichterfassungswerts jedes Fachs in Echtzeit;
einen Bestückungsstatusbeurteilungsschritt zum Beurteilen eines Bestückungsstatus durch Bestimmen, ob sich ein Gewichtserfassungswert jedes Fachs ändert oder nicht, wobei, wenn der Gewichtserfassungswert eines Fachs kleiner wird, bestimmt wird, dass Güter aus dem Fach genommen wurden; und, wenn der Gewichtserfassungswert des Fachs größer wird, bestimmt wird, dass Güter in das Fach zurückgelegt wurden;
einen Einkaufsdatenbankerzeugungsschritt zum Speichern des Echtzeitgewichtserfassungswerts in der Güterdatenbank, um den Gewichtserfassungswert jedes Fachs in der Güterdatenbank zu aktualisieren;
einen Bildidentifizierungsschritt zum Überwachen, unter Verwendung mindestens eines Bildsensors, der in dem oberen Bereich eines geschlossenen Raums positioniert ist und nach unten gerichtet ist und ein Sichtfeld aufweist, das die gesamte untere Oberfläche des geschlossenen Raums abdeckt, von Positionen von Benutzern innerhalb des geschlossenen Raums;
einen Einkaufsbenutzerbeurteilungsschritt zum Bestimmen, auf der Basis der überwachten Positionen der Benutzer, wenn die Güter aus dem Fach genommen oder dahin zurückgelegt werden, einer Identität des Benutzers, der die Güter genommen oder zurückgelegt hat; und
einen Einkaufsinformationsaufzeichnungsschritt zum Aufzeichnen eines Typs und einer Menge der Güter, die von jedem Benutzer genommen werden.

9. Verfahren gemäß Anspruch 8, wobei, vor dem Güterdatenbankerzeugungsschritt, das Gütererfassungsverfahren ferner Folgendes beinhaltet:
einen Regaleinrichtungsschritt zum Platzieren mindestens eines Gütergegenstands in mindestens einem Fach mindestens eines Regals, wobei ein selber Typ von Gütern, der in einem selben Fach platziert ist, einen selben Gewichtswert aufweist und jeder Gewichtswert nur einem Typ von Gütern entspricht; und
einen Gewichtssensoreinrichtungsschritt zum Einrichten eines Gewichtssensors unter jedem Fach und Verbinden des Gewichtssensors mit der Gewichtsermittlungseinheit.

10. Verfahren gemäß Anspruch 8, wobei der Güterdatenbankerzeugungsschritt Folgendes beinhaltet:
einen Initialisierungsschritt zum Initialisieren der Güterdatenbank;
einen Informationseingabeschritt zum Eingeben eines Gewichtswerts und von Güterinformationen jedes Gütergegenstands und Speichern des Gewichtswerts und der Güterinformationen in der Güterdatenbank; und
einen Gewichtswertinitialisierungsschritt zum Ablesen des Gewichtserfassungswerts jedes Fachs, nachdem die Güter darin platziert wurden, und Speichern des Gewichtserfassungswerts in der Güterdatenbank.

11. Verfahren gemäß Anspruch 8, wobei der Bestückungsstatusbeurteilungsschritt Folgendes beinhaltet:
einen Gewichtsunterschiedsberechnungsschritt zum Berechnen eines Unterschiedswerts zwischen dem Echtzeitgewichtserfassungswert jedes Fachs, der in Echtzeit abgelesen wird, und dem Gewichtserfassungswert desselben Fachs, der in der Güterdatenbank gespeichert ist, und Aufzeichnen des Unterschiedswerts als einen Gewichtsunterschiedswert jedes Fachs;
einen Gewichtsunterschiedsbeurteilungsschritt zum Vergleichen des Gewichtsunterschiedswerts von mindestens einem Fach mit 0, wobei, wenn der Gewichtsunterschiedswert eines Fachs kleiner als 0 ist, bestimmt wird, dass Güter aus dem Fach genommen wurden; und, wenn der Gewichtsunterschiedswert des Fachs größer als 0 ist, bestimmt wird, dass Artikel in dem Fach platziert wurden; und
einen Informationsaufzeichnungsschritt zum Aufzeichnen einer Fachnummer des Fachs und des Gewichtsunterschieds des Fachs, wenn der Gewichtsunterschied des Fachs größer als 0 oder kleiner als 0 ist.

12. Verfahren gemäß Anspruch 11, wobei, wenn alle Güter in einem selben Fach einen selben Typ und ein selbes Gewicht aufweisen, der Bestückungsstatusbeurteilungsschritt ferner Folgendes beinhaltet:
einen Gütertypbestimmungsschritt zum Bestimmen eines Typ der Güter, die aus dem Fach genommen werden, gemäß der Fachnummer des Fachs und den dem Fach entsprechenden Güterinformationen, die in der Güterdatenbank gespeichert sind; und
einen Gütermengenberechnungsschritt zum Berechnen eines Verhältnisses eines absoluten Werts des Gewichtsunterschieds des Fachs zu dem Gewichtswert eines einzelnen Gütergegenstands in dem Fach, wobei das Verhältnis durch Verwenden eines Rundungsverfahrens auf eine ganze Zahl gerundet wird, die eine Menge der genommenen Güter ist.

13. Verfahren gemäß Anspruch 8, das ferner Folgendes beinhaltet:
einen Einkaufsbenutzerbeurteilungsschritt zum Bestimmen einer Identität eines Benutzers, der die Güter nimmt oder zurücklegt; und
einen Einkaufsinformationsaufzeichnungsschritt zum Aufzeichnen eines Typs und einer Menge der Güter, die von jedem Benutzer genommen werden.

14. Verfahren gemäß Anspruch 13, wobei der Einkaufsinformationsaufzeichnungsschritt Folgendes beinhaltet:
einen Einkaufsdatenbankerzeugungsschritt zum Erzeugen einer Einkaufsdatenbank des Benutzers gemäß Identitätsinformationen des Benutzers, wenn die Identität des Benutzers erkannt wird; und
einen Einkaufsdatenbankaktualisierungsschritt zum Erzeugen, wenn die Güter genommen werden, von Einkaufsinformationen gemäß dem Typ und der Menge der genommenen Güter und den Identitätsinformationen des Benutzers, der die Güter nimmt, und Speichern der Einkaufsinformationen in der Einkaufsdatenbank des Benutzers; und Erzeugen, wenn die Güter zurückgelegt werden, von Rückgabeinformationen gemäß einem Typ und einer Menge der zurückgelegten Güter und den Identitätsinformationen des Benutzers, der die Güter zurücklegt, und Löschen der Einkaufsinformationen, die den Rückgabeinformationen entsprechen, aus der Einkaufsdatenbank des Benutzers.

## Revendications

1. Un système de détection de marchandises basé sur la surveillance du poids, le système comprenant :
une unité de génération de base de données de produits qui génère une base de données de produits ;
au moins une étagère, dans lequel chaque étagère inclut au moins un présentoir, et au moins un produit est placé sur chaque présentoir ;
une unité d'acquisition du poids qui collecte une valeur de détection du poids en temps réel de chaque présentoir en temps réel ;
une unité d'estimation de statut de prélèvement ou de mise en place qui détermine si une valeur de détection du poids de chaque présentoir change ou non, dans lequel si la valeur de détection du poids d'un présentoir devient plus petite, cela détermine que des produits ont été retirés du présentoir ; et si la valeur de détection du poids du présentoir devient plus grande, cela détermine que des produits ont été remis sur le présentoir ;
une unité de mise à jour de base de données de produits qui stocke la valeur de détection du poids en temps réel dans la base de données de produits, de sorte à mettre à jour la valeur de détection du poids de chaque présentoir dans la base de données de produits ;
un système d'identification d'image ayant au moins un capteur d'image positionné au niveau du sommet d'un espace fermé, tourné vers le bas, et ayant un champ de vision couvrant la surface de dessous entière de l'espace fermé, dans lequel l'au moins un capteur d'image est configuré pour surveiller des positions d'utilisateurs au sein de l'espace fermé ;
un système d'estimation de l'utilisateur d'achats qui détermine, sur la base des positions surveillées des utilisateurs lorsque les produits ont été retirés du présentoir ou remis sur celui-ci, une identité de l'utilisateur qui a retiré ou remis les produits ; et
une unité d'enregistrement d'informations d'achats qui enregistre un type et une quantité des produits retirés par chaque utilisateur.

2. Un système selon la revendication 1, comprenant en outre un dispositif de détection du poids disposé sous chaque présentoir et connecté à l'unité d'acquisition du poids.

3. Un système selon la revendication 1, dans lequel l'unité de génération de base de données de produits comprend :
une unité d'initialisation qui initialise la base de données de produits ;
une unité d'entrée d'informations qui entre une valeur du poids et des informations de produits de chaque produit, et stocke la valeur du poids et les informations de produits dans la base de données de produits ; et
une unité d'initialisation de valeur qui collecte la valeur de détection du poids de chaque présentoir après que les produits ont été placés sur celui-ci, et stocke la valeur de détection du poids dans la base de données de produits.

4. Un système selon la revendication 1, dans lequel l'unité d'estimation de statut de prélèvement ou de mise en place comprend :
une unité de calcul de la différence de poids qui calcule une valeur de la différence entre la valeur de détection du poids en temps réel de chaque présentoir collectée en temps réel et la valeur de détection du poids du même présentoir stockée dans la base de données de produits, et enregistre la valeur de la différence comme une valeur de la différence de poids de chaque présentoir ;
une unité d'estimation de la différence de poids qui compare la valeur de la différence de poids d'au moins un présentoir à 0, dans lequel lorsque la valeur de la différence de poids d'un présentoir est inférieure à 0, cela détermine que des produits ont été retirés du présentoir ; et lorsque la valeur de la différence de poids du présentoir est supérieure à 0, cela détermine que des articles ont été placés sur le présentoir ; et
une unité d'enregistrement d'informations de présentoir qui enregistre un numéro de présentoir du présentoir et la différence de poids du présentoir lorsque la différence de poids du présentoir est supérieure à 0 ou inférieure à 0.

5. Un système selon la revendication 4, dans lequel :
lorsque tous les produits sur un même présentoir ont un même type et un même poids, l'unité d'estimation de statut de prélèvement ou de mise en place comprend en outre :
une unité de détermination de type de produits qui détermine un type des produits retirés du présentoir selon le numéro de présentoir du présentoir et les informations de produits correspondant au présentoir stockés dans la base de données de produits ; et
une unité de calcul de quantité de produits qui calcule un rapport d'une valeur absolue de la différence de poids du présentoir à la valeur du poids d'un seul produit sur le présentoir, dans lequel le rapport est arrondi, au moyen d'une méthode d'arrondissement, à un nombre entier qui est une quantité des produits pris.

6. Un système selon la revendication 1, comprenant en outre :
un système d'estimation d'utilisateur d'achats qui détermine une identité d'un utilisateur qui retire ou remet les produits ; et
une unité d'enregistrement d'informations d'achats qui enregistre un type et une quantité des produits pris par chaque utilisateur.

7. Un système selon la revendication 6, dans lequel l'unité d'enregistrement d'informations d'achats comprend :
une unité de génération de base de données d'achats qui génère une base de données d'achats de l'utilisateur selon des informations d'identité de l'utilisateur lorsque l'identité de l'utilisateur est reconnue ; et
une unité de mise à jour de base de données d'achats qui génère, lorsque les produits sont retirés, des informations d'achats selon le type et la quantité des produits pris et les informations d'identité de l'utilisateur qui prend les produits, et stocke les informations d'achats dans la base de données d'achats de l'utilisateur ;
dans lequel l'unité de mise à jour de base de données d'achats génère, lorsque les produits sont remis, des informations de retour selon un type et une quantité des produits remis et les informations d'identité de l'utilisateur qui remet les produits, et efface les informations d'achats correspondant aux informations de retour issues de la base de données d'achats de l'utilisateur.

8. Un procédé de détection de marchandises basé sur la surveillance du poids d'un système de détection de marchandises, le système comprenant au moins une étagère, dans lequel chaque étagère inclut au moins un présentoir, et au moins un produit est placé sur chaque présentoir, le procédé incluant :
une étape de génération de base de données de produits destinée à générer une base de données de produits ;
une étape d'acquisition du poids destinée à collecter une valeur de détection du poids en temps réel de chaque présentoir en temps réel ;
une étape d'estimation de statut de prélèvement ou de mise en place destinée à estimer un statut de prélèvement ou de mise en place par le fait de déterminer si une valeur de détection du poids de chaque présentoir change ou non, dans lequel si la valeur de détection du poids d'un présentoir devient plus petite, il est déterminé que des produits ont été retirés du présentoir ; et si la valeur de détection du poids du présentoir devient plus grande, il est déterminé que des produits ont été remis sur le présentoir ;
une étape de génération de base de données d'achats destinée à stocker la valeur de détection du poids en temps réel dans la base de données de produits, de sorte à mettre à jour la valeur de détection du poids de chaque présentoir dans la base de données de produits ;
une étape d'identification d'image destinée à surveiller, à l'aide d'au moins un capteur d'image positionné au niveau du sommet d'un espace fermé, tourné vers le bas, et
ayant un champ de vision couvrant la surface de dessous entière de l'espace fermé,
des positions d'utilisateurs au sein de l'espace fermé ;
une étape d'estimation de l'utilisateur d'achats destinée à déterminer, sur la base des positions surveillées des utilisateurs lorsque les produits ont été retirés du présentoir ou remis sur celui-ci, une identité de l'utilisateur qui a retiré ou remis les produits ; et
une étape d'enregistrement d'informations d'achats destinée à enregistrer un type et une quantité des produits retirés par chaque utilisateur.

9. Un procédé selon la revendication 8, le procédé de détection de marchandises comprenant en outre, avant l'étape de génération de base de données de produits :
une étape d'installation d'étagère destinée à placer au moins un produit sur au moins un présentoir d'au moins une étagère, dans lequel un même type de produits placés sur un même présentoir a une même valeur du poids et chaque valeur du poids correspond uniquement à un type de produits ; et
une étape d'installation de capteur de poids destinée à installer un capteur de poids sous chaque présentoir et à connecter le capteur de poids à l'unité d'acquisition du poids.

10. Un procédé selon la revendication 8, dans lequel l'étape de génération de base de données de produits comprend :
une étape d'initialisation destinée à initialiser la base de données de produits ; une étape d'entrée d'informations destinée à entrer une valeur du poids et des informations de produits de chaque produit, et à stocker la valeur du poids et les informations de produits dans la base de données de produits ; et
une étape d'initialisation de valeur du poids destinée à collecter la valeur de détection du poids de chaque présentoir après que les produits ont été placés sur celui-ci, et à stocker la valeur de détection du poids dans la base de données de produits.

11. Un procédé selon la revendication 8, dans lequel l'étape d'estimation de statut de prélèvement ou de mise en place comprend :
une étape de calcul de la différence de poids destinée à calculer une valeur de la différence entre la valeur de détection du poids en temps réel de chaque présentoir collectée en temps réel et la valeur de détection du poids du même présentoir stockée dans la base de données de produits, et à enregistrer la valeur de la différence comme une valeur de la différence de poids de chaque présentoir ;
une étape d'estimation de la différence de poids destinée à comparer la valeur de la différence de poids d'au moins un présentoir à 0, dans lequel lorsque la valeur de la différence de poids d'un présentoir est inférieure à 0, il est déterminé que des produits ont été retirés du présentoir ; et lorsque la valeur de la différence de poids du présentoir est supérieure à 0, il est déterminé que des articles ont été placés sur le présentoir ; et
une étape d'enregistrement d'informations destinée à enregistrer un numéro de présentoir du présentoir et la différence de poids du présentoir lorsque la différence de poids du présentoir est supérieure à 0 ou inférieure à 0.

12. Un procédé selon la revendication 11, dans lequel, lorsque tous les produits sur un même présentoir ont un même type et un même poids, l'étape d'estimation de statut de prélèvement ou de mise en place comprend en outre :
une étape de détermination de type de produits destinée à déterminer un type des produits retirés du présentoir selon le numéro de présentoir du présentoir et les informations de produits correspondant au présentoir stockés dans la base de données de produits ; et
une étape de calcul de quantité de produits destinée à calculer un rapport d'une valeur absolue de la différence de poids du présentoir à la valeur du poids d'un seul produit sur le présentoir, dans lequel le rapport est arrondi, au moyen d'une méthode d'arrondissement, à un nombre entier qui est une quantité des produits pris.

13. Un procédé selon la revendication 8, comprenant en outre :
une étape d'estimation d'utilisateur d'achats destinée à déterminer une identité d'un utilisateur qui retire ou remet les produits ; et
une étape d'enregistrement d'informations d'achats destinée à enregistrer un type et une quantité des produits retirés par chaque utilisateur.

14. Un procédé selon la revendication 13, dans lequel l'étape d'enregistrement d'informations d'achats comprend :
une étape de génération de base de données d'achats destinée à générer une base de données d'achats de l'utilisateur selon des informations d'identité de l'utilisateur lorsque l'identité de l'utilisateur est reconnue ; et
une étape de mise à jour de base de données d'achats destinée à générer, lorsque les produits sont retirés, des informations d'achats selon le type et la quantité des produits pris et les informations d'identité de l'utilisateur qui prend les produits, et à stocker les informations d'achats dans la base de données d'achats de l'utilisateur ; et à générer, lorsque les produits sont remis, des informations de retour selon un type et une quantité des produits remis et les informations d'identité de l'utilisateur qui remet les produits, et à effacer les informations d'achats correspondant aux informations de retour issues de la base de données d'achats de l'utilisateur.
